Europäisches Patentamt

European Patent Office

Office européen des brevets

(11) Publication number: **0 350 167**
**A1**

# EUROPEAN PATENT APPLICATION

(21) Application number: **89305896.6**

(51) Int. Cl.⁴ **C10M 171/00** , //**F16F9/53**

(22) Date of filing: **12.06.89**

(30) Priority: **13.06.88 GB 8813908**

(43) Date of publication of application:
**10.01.90 Bulletin 90/02**

(34) Designated Contracting States:
**AT BE CH DE ES FR GB GR IT LI NL SE**

(71) Applicant: **CASTROL LIMITED**
**Burmah House Pipers Way**
**Swindon Wiltshire SN3 1RE(GB)**

(72) Inventor: **Gillies, Duncan George**
**Hawthorns Lower Sandhurst Road**
**Finchampstead Wokingham Berkshire(GB)**
Inventor: **Sutcliffe, Leslie Howard**
**56 Lindley Road**
**Walton-on-Thames Surrey, KT12 3HA(GB)**
Inventor: **Bailey, Phillip**
**41 Melrose Way**
**Chorley Lancashire, PR7 3EX(GB)**

(74) Representative: **Claisse, John Anthony, Dr.**
**97 Portway**
**Wells Somerset BA5 2BR(GB)**

(54) **Functional fluids.**

(57) This invention concerns electrorheological fluids consisting of a dispersion of an aluminum silicate in an electrically non-conductive hydrophobic liquid such as silicone oil, the aluminum silicate having a Si/Al ratio of at least 8:1. Preferred Si/Al ratios are considerably in excess of this, for example up to 175:1 or more. Fluids of the invention have shown particularly large static yield stress values compared with known fluids. In addition, lower current flows have been observed than with known fluids when they are subjected to significantly higher electrical potentials. The effect has also been observed over a wide temperature range.

EP 0 350 167 A1

## FUNCTIONAL FLUIDS

This invention concerns functional fluids, and in particular electrorheological fluids, sometimes also referred to as electroviscous fluids.

Electrorheological fluids have been proposed hitherto which consist of finely divided hydrophilic solids dispersed in hydrophobic, electrically non-conductive oils, the viscosity of such fluids being increased substantially by the application of a strong electric field. Direct or alternating potentials of sufficient strength can be used to cause these fluids to become plastic or solid. Since only very low currents flow through the fluids, low electric power can be used to control large amounts of physical power, for example in power transmission systems for vehicles.

Various hydrophilic solids have been proposed for use in electrorheological fluids, for example certain polymers, ion exchange materials or silica gel. G.B. Patent Specification 1570234 describes salts of certain polymeric materials exhibiting electrorheological properties, for example alkali metal salts of polymethacrylic acid containing water. Another class of solids proposed for the purpose in U.S. Patent Specification 4702855 are aluminum silicates having an Al/Si ratio of from 0.15 to 0.80:1 (i.e. a Si/Al ratio of from 1.25 to 6.67). The water content of these aluminum silicates is from 1 to 25 percent by weight, and they are used in electrically non-conductive hydrophobic liquids in combination with a dispersing agent, the preferred dispersing agents being for certain classes of functionalised polysiloxanes in combination with a non-functional silicone oil.

According to the present invention there is provided an electrorheological fluid comprising a dispersion of an aluminum silicate in an electrically non-conductive hydrophobic liquid, the aluminum silicate having a Si/Al ratio of at least 8:1.

Electrorheological fluids of the present invention have shown particularly large static yield stress values compared with those of hitherto proposed fluids. In particular, the viscosity of the fluids has been increased to levels obtained hitherto but with lower electrical power consumption, the latter being an important consideration in practical devices. Furthermore, electrorheological fluids of the present invention have shown high static yield values over a wide temperature range, in particular between -30°C and +60°C. Large electrical potential gradients have also been applied without electrical breakdown of the fluids.

The Si/Al ratio of the aluminum silicates used in accordance with the invention is at least 8:1, and it can be as high as 175:1 or more, but it is preferably at least 10:1, e.g. at least 15:1, more preferably at least 20:1. Preferred ranges are from 20 to 40:1, and more preferably from 20 to 30:1. A particularly advantageous ratio is about 22:1. Although not wishing to be bound by theory, it is believed that aluminum silicates which exhibit a particularly strong electrorheological effect in accordance with the invention are zeolites having a generally tubular structure. A particularly preferred zeolite for use in accordance with the invention by virtue of its especially good electrorheological effect is supplied under the designation ZSM-5 by Laporte Industries Limited, Widnes, Cheshire, England.

The aluminum silicates can be used in hydrogen or alkali metal form, e.g. the sodium form, the hydrogen form being preferred by virtue of the particularly low electrical power consumption which has been observed while providing a good electrorheological effect over a wide temperature range, for example from -30°C to more than 100°C. A mixture of cations can also be used.

The aluminum silicates used in accordance with the invention preferably contain a polar material. Examples of polar materials which can be used include water, formamide, lower ($C_{1-4}$) alkanols, e.g. methanol, water in general being preferred. The amount of polar material present is preferably less than 6 percent by weight, and more peferably less than 2 percent by weight. Although an appreciable electrorheological effect has been achieved using a substantially anhydrous aluminum silicate, it is preferred that at least 0.25 percent by weight of a polar material is present.

The electrorheological fluids of the present invention will usually contain from 10 to 40 percent by volume of the aluminum silicate, and preferably from 25 to 30 percent by volume. The electrorheological effect will be insufficient if too little of the aluminum silicate is present, and if excessive amounts are present it may be difficult to keep the aluminum silicate dispersed in the hydrophobic liquid.

The average particle size of the aluminum silicate will usually be less than 50 microns, preferably less than 10 microns, and more preferably about 2 microns.

The hydrophobic liquid can be selected from those proposed hitherto for producing electrorheological fluids. Examples of liquids that can be used include silicones and hydrocarbons. It is however particularly preferred to use liquids which repel water as they generally serve to protect the electrorheological fluids by minimising the risk of affecting the water content of the aluminum silicate.

Electrorheological fluids of the present invention can include other materials proposed hitherto for use in

2

electrorheological fluids, for example non-ionic dispersing agents, e.g. dodecylamine or sorbitol hexoleate.

Electrorheological fluids of the present invention have shown particularly low current flow at significantly higher electric potentials compared with hitherto proposed fluids. For example, currents of less than 5, e.g. 2 to 3, microamps per square centimetre have been observed at potentials of 10kV per millimetre. This is particularly advantageous as the increase in viscosity of electrorheological fluids tends to increase with increasing applied potential. The power consumed is often lower than with hitherto proposed fluids for the same increase in viscosity.

Electrorheological fluids of the present invention have also shown a good electrorheological effect over a wide temperature range. For example, useful increases in viscosity have been achieved down to at least -30°C even when the aluminum silicates contain water. In a practical device, for example, a shock absorber could be provided with two operating cylinders and pistons, the cylinders containing different fluids of the invention showing good electrorheological properties at different temperatures, thereby providing a shock absorbing effect over an extended temperature range.

The following Examples are given by way of illustration only. All parts are by weight unless otherwise stated.

Example 1

Various zeolites, all supplied by Laporte Industries Limited under the designations given in Table 1, were dispersed in 20 centistoke silicone oil (viscosity measured at 20°C, density 0.95 g/cc - Dow-Corning Ltd., Barry, U.K.) to give electrorheological fluids having a solids content of 25 percent by volume, the water contents of the zeolites having been adjusted to the values listed in Table 1. Water contents indicated as 0.5 percent were achieved by dehydration in a vacuum oven at 140°C, and those designated 0 percent were obtained by heating the aluminum silicate in a vacuum furnace at 600°C. A similar fluid was prepared for comparison purposes by dispersing 25 percent of lithium polymethacrylate in the same silicone oil.

The static yield stress of each suspension was then measured at various temperatures using the method of J.E.Stangroom (Phys.Technol, 14-1983-290) on a commercially available static yield test rig modified to operate in the temperature range -30°C to +60°C. The electrode area was 5.06cm$^2$, and the electrode gap was 0.7mm. Any current greater than 4mA was noted as representing electrical breakdown (B/D in Table 1).

The results in Table 1 show that the electrorheological fluids of the present invention exhibited particularly large increases in viscosity compared with the prior art fluids which were examined. Furthermore, static yield values comparable with those of the prior art fluids were achieved for fluids of the present invention using lower current densities. In addition, potential gradients could be applied to fluids of the present invention which caused electrical breakdown of the prior art fluids.

TABLE 1

| Dispersed Solid | Si:Al | Potential Gradient (kV/mm) | Temperature | | | | | |
|---|---|---|---|---|---|---|---|---|
| | | | -30°C | | +24°C | | +60°C | |
| | | | Static Yield Stress (kPa) | Current (µA) | Static Yield Stress (kPa) | Current (µA) | Static Yield Stress (kPa) | Current (µA) |
| H-ZSM-5 <0.5% $H_2O$ | 21.25 | 2 | 0.207 | <1.0 | 1.242 | <1.0 | 1.610 | 2 |
| | | 3 | 0.393 | <1.0 | 3.775 | <1.0 | 3.850 | 8 |
| H-ZSM-5 0% $H_2O$ | 21.25 | 2 | 0.142 | <1.0 | 0.334 | <1.0 | 0.253 | <1.0 |
| | | 3 | 0.542 | <1.0 | 0.934 | <1.0 | 0.373 | <1.0 |
| Na-ZSM-5 <0.5% $H_2O$ | 21.25 | 2 | 0.883 | <1.0 | 3.233 | 86 | 0.400 | 220 |
| | | 3 | 1.550 | <1.0 | 6.900 | 120 | 0.866 | 511 |
| Li-ZSM-5 <0.5% $H_2O$ | 21.25 | 2 | 0.957 | <1.0 | 0.900 | 18 | 1.013 | 58 |
| | | 3 | 2.076 | <1.0 | 2.167 | 31 | 1.920 | 162 |
| Na-ZSM-5 <0.5% $H_2O$ | 174 | 2 | 0.190 | <1.0 | 0.328 | <1.0 | 0.347 | <1.0 |
| | | 3 | 0.260 | <1.0 | 0.542 | <1.0 | 0.720 | <1.0 |
| Na-13X 3% $H_2O$ | 1.205 | 2 | 0.980 | <1.0 | 0.706 | 3 | 0.693 | 52 |
| | | 3 | 1.250 | <1.0 | 1.267 | 10 | 1.307 | 123 |
| H-13X 4% $H_2O$ | 1.205 | 2 | 0.180 | <1.0 | 0.840 | 2652 | B/D | B/D |
| | | 3 | 0.280 | 16 | B/D | B/D | B/D | B/D |
| LiPMA 20% $H_2O$ | - | 2 | 0.132 | <1.0 | 0.740 | 9 | 0.715 | 712 |
| | | 3 | 0.465 | <1.0 | 1.400 | 24 | 0.995 | 3600 |

Example 2

The procedure of Example 1 was repeated using a suspension of 25 percent by volume of H-mordenite in the same type of silicone oil as was used in Example 1. The H-mordenite had a water content of 1 percent, and a silicon to aluminum ratio of 10.7:1. The static yield stress of the suspension was measured as described in Example 1, the results obtained at various temperatures being given below.

| Electric Field (kV/mm) | Shear stress (kPa) | Current (µA) |
|---|---|---|
| +24°C | | |
| 2 | 0.95 | 2 |
| 3 | 1.28 | 8 |
| +60°C | | |
| 2 | 0.43 | 8 |
| 3 | 0.69 | 15 |
| -30°C | | |
| 2 | 0.19 | 1 |
| 3 | 0.39 | 1 |

Claims

1. An electrorheological fluid comprising a dispersion of an aluminum silicate in an electrically non-conductive hydrophobic liquid, the aluminum silicate having a Si/Al ratio of at least 8:1.

2. An electrorheological fluid according to claim 1, wherein the Si/Al ratio is at least 10:1.

3. An electrorheological fluid according to claim 2, wherein the Si/Al ratio is at least 15:1.

5. An electrorheological fluid according to any of the preceding claims, wherein the Si/Al ratio is from 20 to 40:1.

6. An electrorheological fluid according to claim 5, wherein the Si/Al ratio is from 20 to 30:1.

7. An electrorheological fluid according to claim 6, wherein the Si/Al ratio is about 22:1.

8. An electrorheological fluid according to any of the preceding claims, containing from 10 to 40 percent by volume of the aluminum silicate.

9. An electrorheological fluid according to claim 8, containing from 25 to 30 percent by volume of the aluminum silicate.

10. An electrorheological fluid according to any of the preceding claims, wherein the aluminum silicate contains not more than 6 percent by weight of a polar substance.

11. An electrorheological fluid according to claim 10, wherein the aluminum silicate contains not more than 2 percent by weight of a polar substance.

12. An electrorheological fluid according to claim 10 or claim 11, wherein the polar substance is water.

13. An electrorheological fluid according to any of the preceding claims, wherein the aluminum silicate has an average particle size of less than 50 microns.

14. An electrorheological fluid according to claim 11, wherein the aluminum silicate has an average particle size of less than 10 microns.

15. An electrorheological fluid according to any of the preceding claims, exhibiting a curent flow of less than 5 microamps per square centimetre at a potential gradient of 10kV per millimetre.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 367 872 (T.W. MARTINEK) * Claims 1,6,7; column 2, lines 2,11; column 3, line 7 * | 1-15 | C 10 M 171/00 // F 16 F  9/53 |
| X | EP-A-0 170 939 (BAYER) * Claims 1,2; page 7, lines 23-27 * | 1-15 | |
| X | EP-A-0 201 827 (BAYER) * Claim 1; page 7, line 32 - page 8, line 2 * | 1-15 | |
| A | US-A-3 047 507 (W.M. WINSLOW) * Claim 1; column 5, lines 31-43 * | 1 | |
| | | | TECHNICAL FIELDS SEARCHED (Int. Cl.4) |
| | | | C 10 M F 16 F |

The present search report has been drawn up for all claims

| Place of search | Date of completion of the search | Examiner |
|---|---|---|
| THE HAGUE | 19-07-1989 | ROTSAERT L.D.C. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)